# EUROPÄISCHE PATENTSCHRIFT

(11) **EP 2 756 207 B1**
(45) Veröffentlichungstag und Bekanntmachung des Hinweises auf die Patenterteilung: **20.01.2016**
(21) Anmeldenummer: 12743953.7
(22) Anmeldetag: 31.07.2012
(51) Int. Cl.: F16G 13/16, H02G 11/00

(54) **KETTENGLIED**
CHAIN LINK
MAILLON DE CHAÎNE

(30) Priorität: 16.09.2011 DE 102011113378
(43) Veröffentlichungstag der Anmeldung: 23.07.2014
(73) Patentinhaber: Tsubaki Kabelschlepp GmbH, 57482 Wenden-Gerlingen (DE)
(72) Erfinder: SCHÖLER, Dirk, 57234 Wilnsdorf (DE); BENSBERG, Jochen, 57271 Hilchenbach (DE)
(74) Vertreter: Neumann, Ditmar
(86) Internationale Anmeldenummer: PCT/EP2012/064950
(87) Internationale Veröffentlichungsnummer: WO 2013/037557

(56) Entgegenhaltungen:
- DE-A1-102005 061 777
- DE-A1-102006 027 246
- DE-A1-102007 010 746
- DE-U1-202008 008 358
- DE-U1-202009 005 650

## Beschreibung

Der Gegenstand der Erfindung betrifft ein Kettenglied einer Energieführungskette und eine Energieführungskette mit einem solchen Kettenglied.

Zum Führen von Leitungen, Kabeln, Schläuchen und dergleichen zwischen einem ortsfesten und einem beweglichen Anschlusspunkt werden Energieführungsketten eingesetzt. Eine Energieführungskette ist gebildet durch eine Mehrzahl von Kettengliedern. Die Kettenglieder sind gelenkig miteinander verbunden. Jedes Kettenglied umfasst zwei Laschen und wenigstens einen mit den Laschen verbindbaren bzw. verbundenen Quersteg. Die Laschen und Querstege bilden einen Führungskanal, in dem die Leitungen, Schläuche oder dergleichen angeordnet sind.

Aus dem Stand der Technik sind Kettenglieder bekannt, welche wenigstens einen um eine Schwenkachse an einer Lasche verschwenkbaren Quersteg aufweisen. Ein solcher Quersteg weist auf der gegenüberliegenden Seite einen Schnapphaken auf, der mit der gegenüberliegenden Lasche lösbar verbindbar ist.

Aus dem Stand der Technik siehe zum Beispiel DE 102006027246 und DE 20200800358U, sind auch Kettenglieder bekannt, bei denen der Quersteg mit den Seitenlaschen auf beiden Seiten durch Stecken und Rasten verbindbar ist. In der Regel sehen solche Kettenglieder Verbindungselemente vor, mit denen sich die Seitenlaschen und der Quersteg wieder voneinander trennen lassen.

Bei den bekannten Kettengliedern kann es nun durch Krafteinwirkung dazu kommen, dass die Seitenlaschen und der Quersteg unbeabsichtigt voneinander getrennt werden.

Aufgabe der Erfindung ist es daher, die mit Bezug auf den Stand der Technik geschilderten Probleme zumindest teilweise zu lindern und insbesondere ein Kettenglied aufzuzeigen, bei dem die Verbindung zwischen Seitenlasche und Quersteg nicht versehentlich gelöst werden kann und das gleichzeitig einfach zu montieren ist.

Diese Aufgaben werden gelöst mit einem Kettenglied gemäß den Merkmalen des Patentanspruchs 1. Weitere vorteilhafte Ausgestaltungen der Vorrichtung sind in den abhängigen Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Diese Aufgaben werden insbesondere durch ein Kettenglied einer Energieführungskette mit zwei parallelen Seitenlaschen und mindestens einem Quersteg gelöst. Die zwei Seitenlaschen und der mindestens eine Quersteg sind durch Anlegen, Schwenken und Rasten miteinander verbunden, wobei zwei Schwenkgruppen, die jeweils eine Anlagefläche und eine entsprechende Aufnahme zum Anlegen der Anlagefläche derart umfassen, dass die Schwenkgruppen in angelegtem Zustand eine Schwenkachse quer zur Längsachse des Kettenglieds ausbilden, und zwei Rastgruppen, die jeweils durch ein Verriegelungselement und ein entsprechendes Widerlager zur Aufnahme des Verriegelungselements gebildet sind, vorgesehen sind.

Mit der Längsachse des Kettenglieds ist die Richtung gemeint, in die sich im montierten Zustand des Kettenglieds die geführten Leitungen erstrecken. Das Kettenglied wird nach oben und/oder nach unten von jeweils einem Quersteg begrenzt und zu den Seiten von den Seitenlaschen. Insbesondere sind jeweils mindestens ein Element der Schwenkgruppe und ein Element der Rastgruppe an dem Quersteg und einer Seitenlasche ausgebildet. Die Elemente der Schwenkgruppe und der Rastgruppe sind an den Seitenlaschen insbesondere in einem oberen und/oder unteren Bereich ausgebildet. Die Elemente der Schwenkgruppe und die Elemente der Rastgruppe sind an dem Quersteg in den Endbereichen in Längsachse des Kettenglieds ausgebildet, insbesondere in den Eckbereichen. Bevorzugt sind die Aufnahmen der zwei Schwenkgruppen jeweils an einer Seitenlasche ausgebildet und die zwei Anlagenflächen sind in zwei Endbereichen, bevorzugt in zwei Eckbereichen, des Querstegs ausgebildet. Die Anlagenflächen und die Aufnahmen sind so geformt, dass die Anlagefläche in und/oder an die Aufnahmen anlegbar ist und anschließend ein Verschwenken des Querstegs zu den Seitenlaschen erfolgen kann. Im angelegten Zustand bilden somit die zwei Schwenkgruppen eine Schwenkachse aus, um die der Quersteg geschwenkt werden kann. Die Anlagenflächen und die Aufnahmen weisen dazu ein halbkreisähnliches Profil auf, wobei die halbkreisähnlichen Profile in einen geraden Abschnitt tangential oder mit einem Winkel übergehen können. Im montierten Zustand umfasst die Aufnahme die Anlagefläche teilweise und erstreckt sich insbesondere nach oben über die Anlagefläche.

Zur festen Verbindung des Querstegs mit den Seitenlaschen wird der angelegte Quersteg um die Schwenkachse geschwenkt bis die Elemente der Rastgruppen am Quersteg und den Seitenlaschen in Eingriff miteinander kommen. Die Elemente der Rastgruppe sind an dem Quersteg in Längsrichtung insbesondere an dem den Elementen der Schwenkgruppen gegenüberliegenden Ende angeordnet. Durch Verrasten des Verriegelungselements und des Widerlagers erfolgt eine kraft- und/oder formschlüssige Verbindung zwischen Quersteg und den Seitenlaschen. Insbesondere sind die Rastgruppen so ausgebildet, dass eine Lösung der Rastverbindung nur durch Einwirkungen von Kräften in entgegengesetzter Richtung an zwei Orten, insbesondere an den beiden Seitenlaschen, gelöst werden kann. Die Rastverbindungen müssen also an den zwei Seitenlaschen gleichzeitig gelöst werden, damit der Quersteg vollständig von den Seitenlaschen gelöst werden kann.

Gemäß der vorliegenden Erfindung wird somit ein Kettenglied dadurch montiert, dass ein Quersteg an zwei parallelen Seitenlaschen angelegt wird, um eine durch das Anlegen ausgebildete Schwenkachse verschwenkt wird, wobei die Anlagefläche und die Aufnahme in Kontakt bleiben und durch ein abschließendes Verrasten fest miteinander verbunden werden. Auf diese Weise wird insbesondere auch ermöglicht, dass Querstege, die sich unterscheiden, bspw. in ihrer Länge quer zur Längsachse des Kettenglieds, mit den gleichen Seitenlaschen verbunden werden können. Auf diese Art wird eine Art Baukastensystem für Kettenglieder gegeben.

Das Verriegelungselement ist durch ein Federelement mit einem Raststeg und das Widerlager ist durch eine entsprechende Rastvertiefung zur Aufnahme des Raststegs gebildet. Bevorzugt ist das Federelement mit Raststeg an dem Quersteg angeordnet und die Rastvertiefung in einer Seitenlasche ausgebildet. Das Federelement wird insbesondere durch ein sich quer zur Längsachse nach unten erstreckendes mit dem Quersteg einstückig verbundenen Abschnitt gebildet, der quer zur Längsachse nach außen federnd auslenkbar ist. Der Raststeg erstreckt sich dabei von diesem Element in Richtung des Kettenglieds und greift in eine entsprechende Rastvertiefung auf einer Außenseite der Seitenlasche ein. Durch Auslenken des Federelements nach außen kann die Rastverbindung zwischen Seitenlasche und Quersteg gelöst werden.

Gemäß einer vorteilhaften Weiterbildung der Erfindung verhindern die Schwenkgruppen eine Bewegung des Querstegs zu der Seitenlasche quer zur Längsachse des Kettenglieds. Dies wird insbesondere dadurch erreicht, dass an dem Quersteg und/oder der Seitenlasche innerhalb der Elemente der Schwenkgruppen Anschlagflächen ausgebildet sind, an die der Quersteg bzw. die Seitenlaschen quer zur Längsachse des Kettenglieds anliegen. Da eine solche Verhinderung einer Querbewegung bereits im angelegten Zustand erreicht wird, wird einerseits das Anlegen selbst vereinfacht und zum anderen die Schwenkbewegung geführt. Darüber hinaus wird auch im montierten Zustand eine solche Querbewegung unterdrückt. Somit leistet die Schwenkgruppe einen Beitrag zur formschlüssigen Verbindung zwischen Quersteg und Seitenlaschen.

Gemäß einer weiteren vorteilhaften Weiterbildung der Erfindung ist mindestens ein Steg an dem Quersteg zum Inneren des Kettenglieds ausgebildet und eine Ausnehmung in den Seitenlaschen zur rastenden Aufnahme des Stegs ausgebildet. Der Steg erstreckt sich insbesondere quer zur Längsachse des Kettenglieds und kann sich so über die ganze Breite des Querstegs erstrecken, aber auch nur an in den Endbereichen ausgebildet sein. Der Steg ist auf der Innenseite des Querstegs hin zu den führenden Leitungen am Quersteg ausgebildet. Der Steg weist insbesondere im Endbereich des Querstegs Hinterschneidungen auf, so dass der Steg mit der Ausnehmung an den Seitenlaschen verrasten kann. Entsprechend ist die Ausnehmung an einer oberen und/oder unteren Seite der Seitenlaschen ausgebildet und weist eine dem Steg entsprechende Form auf. Der Steg und die Ausnehmung können das Verriegelungselement bzw. das Widerlager der Rastgruppe bilden, werden aber bevorzugt kumulativ zu der Rastgruppe vorgesehen, so dass der Quersteg an zwei Stellen mit einer Seitenlasche verrastet, also insgesamt an vier Stellen mit den beiden Seitenlaschen.

Es ist besonders bevorzugt, wenn ein Profil zur Befestigung von mindestens einem Steg an dem Quersteg zum Inneren des Kettenglieds ausgebildet ist. Mit dem Profil ist ein Bauelement gemeint, das nicht stoffschlüssig mit dem Quersteg verbunden ist und nicht mit diesem in einem Arbeitsschritt produziert wird, also erst nach der Herstellung an dem Quersteg befestigt wird. Das Bauteil wird in nicht verbundenem Zustand als Profil bezeichnet und in verbundenem Zustand bildet das Profil zum Inneren des Kettenglieds den Steg aus. Dies hat den Vorteil, dass der Steg nicht in einem Arbeitsprozess mit dem Quersteg hergestellt werden muss, sondern nachträglich mit diesem verbunden werden kann. Da der Steg im Endbereich Hinterschneidungen aufweist, ist eine Herstellung gleichzeitig mit dem Quersteg nur mit hohem Aufwand möglich. Zudem können so unterschiedliche Stege im Hinblick auf unterschiedliche Anforderungen verwendet werden. So kann der Steg den Anforderungen der zu führenden Leitungen entsprechenden angepasst werden, ohne dass ein kompletter Quersteg angepasst werden muss. Der Steg dient zudem zur Befestigung eines Trennstegs, der wiederum die zu führenden Leitungen voneinander trennen kann.

In diesem Zusammenhang ist es bevorzugt, dass der Quersteg eine Aussparung zur rastenden Aufnahme des Profils aufweist, die sich quer zur Längsachse des Kettenglieds erstreckt. Dementsprechend weist das Profil einen Abschnitt auf, der in die Aussparung rastend eingesteckt werden kann. Durch Einstecken des Profils in die Aussparung ist das Profil in wenigen Montageschritten mit dem Quersteg verbindbar. Es ist ferner bevorzugt, dass sich Rastvorsprünge zu beiden Seiten entlang der Aussparung zum Inneren des Kettenglieds erstrecken. Die Rastvorsprünge führen zum einen das Profil beim Einstecken in die Aussparung und bilden zum anderen Elemente, die den rastenden Halt unterstützen. Die Rastvorsprünge bilden in diesem Zusammenhang Federelemente, die mit dem Profil verrasten.

So ist es auch bevorzugt, dass die Rastvorsprünge Konturen zur Aufnahme des Profils aufweisen, die mit Konturen des Profils rastend zusammenwirken. Die Konturen der Rastvorsprünge und des Profils erstrecken sich im eingebauten Zustand insbesondere abschnittsweise in Richtung der Längsachse des Kettenglieds. Durch die Konturen wird die Verbindung zwischen Quersteg und Profil sicherer ausgeführt.

Gemäß einer weiteren vorteilhaften Weiterbildung der Erfindung bildet das Profil das Verriegelungselement der Rastgruppe, insbesondere bildet das Profil das Verriegelungselemente von beiden Rastgruppen.

Gemäß noch einer weiteren vorteilhaften Weiterbildung der Erfindung weist die Schwenkgruppe eine Vertiefung und eine entsprechende, in die Vertiefung eingeführte Erhebung auf, die zwischen Schwenkachse und Rastgruppe angeordnet ist. Bevorzugt ist die Erhebung an der Seitenlasche angeordnet und die Vertiefung in dem Quersteg ausgebildet. Durch die in die Vertiefung eingreifende Erhebung wird zum einen die Schwenkbewegung geführt und zum anderen der Abstand zwischen den zwei Seitenlaschen beim Anlegen und Verschwenken so vorgegeben, dass die Elemente der Rastgruppe ineinander eingreifen können.

Gemäß einer weiteren vorteilhaften Weiterbildung der Erfindung erstreckt sich das Verriegelungselement in Längsrichtung des Kettenglieds und das Widerlager hält das Verriegelungselement in verbundenen Zustand durch Formschluss in vertikaler Richtung. Insbesondere ist das Verriegelungselement am gegenüberliegenden Ende zu der Schwenkgruppe an dem Quersteg ausgebildet und das Widerlager entsprechend in der Seitenlasche.

Gemäß einem weiteren Aspekt der Erfindung wird eine Energieführungskette umfassend eine Vielzahl von erfindungsgemäßen Kettengliedern vorgeschlagen. Die Energieführungskette erstreckt sich insbesondere zwischen einem ortsfesten und einem beweglichen Anschlusspunkt.

Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: eine Energieführungskette,
- Fig. 2:: eine Seitenlasche einer Ausführungsform des erfindungsgemäßen Kettenglieds in perspektivischer Ansicht,
- Fig. 3:: einen Quersteg einer Ausführungsform des erfindungsgemäßen Kettenglieds in perspektivischer Ansicht,
- Fig. 4:: ein Kettenglied während der Montage in einer perspektivischen Ansicht,
- Fig. 5:: ein Kettenglied während der Montage in Seitenansicht,
- Fig. 6:: ein montiertes Kettenglied in Seitenansicht,
- Fig. 7:: einen Ausschnitt eines Querschnitts durch ein montiertes Kettenglied,
- Fig. 8:: einen Quersteg in Seitenansicht im Querschnitt.

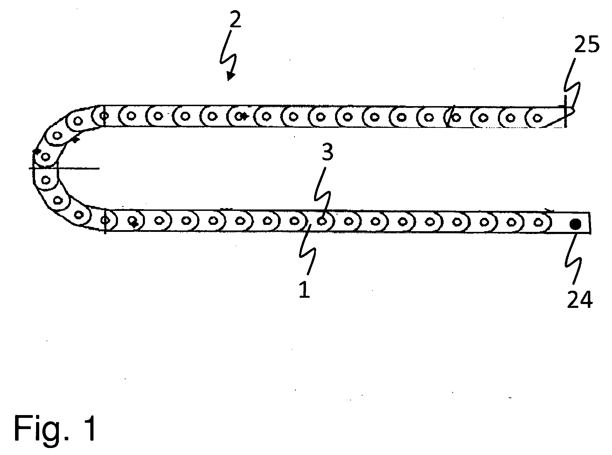

In Fig. 1 ist eine Energieführungskette 2 mit einer Vielzahl von Kettengliedern 1 dargestellt, wobei die Kettenglieder 1 Seitenlaschen 3 aufweisen, die über Anschlussbereiche gelenkig miteinander verbunden sind. Die Energieführungskette verbindet einen ortsfesten Festanschlusspunkt 24 mit einem beweglichen Anschlusspunkt 25. Die Kettenglieder 1 weisen in der Regel zwei Seitenlaschen 3 und mindestens einen Quersteg 4 auf.

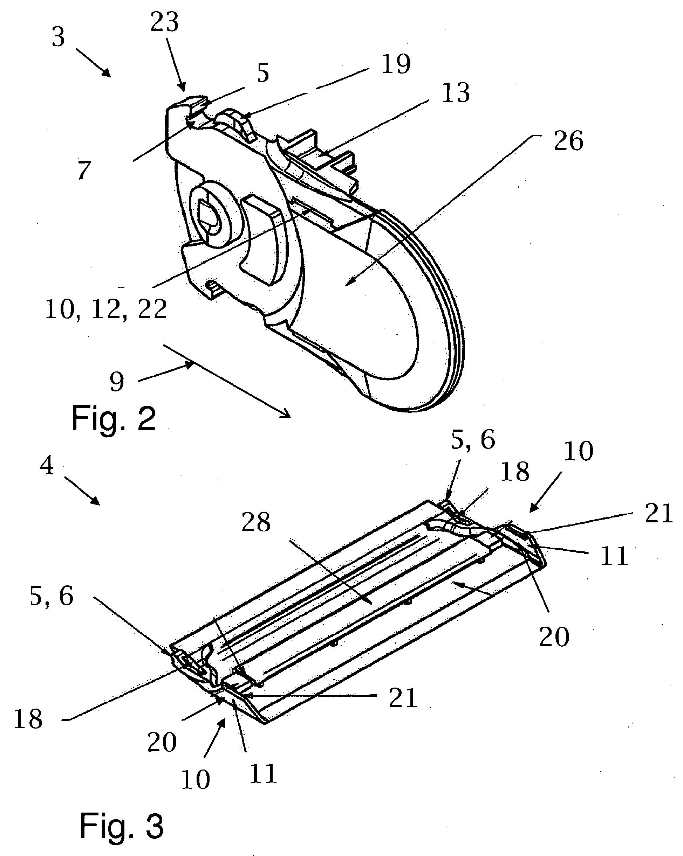

Fig. 2 zeigt in perspektivischer Ansicht eine Seitenlasche 3 einer Ausführungsform eines erfindungsgemäßen Kettenglieds 1. Die Seitenlasche 3 erstreckt sich in einer Längsachse 9 und weist in einem Endbereich in Richtung der Längsachse 9 einen Anschlussbereich 23 auf, über den die Seitenlasche 3 mit weiteren Seitenlaschen 3 gelenkig verbindbar ist. In der Darstellung der Fig. 2 ist eine Außenseite 26 der Seitenlasche 3 zu sehen. Auf einer Oberseite weist die Seitenlasche 3 eine Aufnahme 7 auf, die ein Element einer Schwenkgruppe 5 ist. Auf der Oberseite ist ferner eine Erhebung 19 ausgebildet, die in Richtung der Längsachse 9 zwischen der dem Element der Schwenkgruppe 5 und einem Element einer Rastgruppe 10 angeordnet ist. Das Element der Rastgruppe 10 ist ein Widerlager 12, das in Form einer Rastvertiefung 22 ausgebildet ist und sich an der Außenseite 26 der Seitenlasche 3 befindet. Auf der Oberseite hin zur Innenseite weist die Seitenlasche 3 zudem eine Ausnehmung 13 auf.

In Fig. 3 ist ein Quersteg 4 in perspektivischer Darstellung gezeigt, der zusammen mit zwei Seitenlaschen 3 ein Kettenglied 1 bilden kann. Der Quersteg 4 ist mit einer Seite gezeigt, die im montierten Zustand die Innenseite des Kettenglieds 1 bildet und den zu führenden Leitungen zugewandt ist. Der Quersteg 4 weist ebenfalls Elemente der Schwenkgruppe 5 und der Rastgruppe 10 auf. Das Element der Schwenkgruppe 5 ist durch jeweils eine Anlagefläche 6 gebildet, die in einem Eckbereich des Querstegs 4 ausgebildet ist. Die Elemente der Rastgruppe 10 sind durch ein Verriegelungselement 11 gebildet, das ein Federelement 20 und einen Raststeg 21 aufweist. Zwischen der Schwenkgruppe 5 und den Elementen der Rastgruppe 10 ist eine Vertiefung 18 außen an dem Quersteg 4 ausgebildet. Ferner weist der Quersteg 4 auf seiner Innenseite einen Steg 28 auf, der sich quer zur Längsachse 9 des Kettenglieds 1 erstreckt.

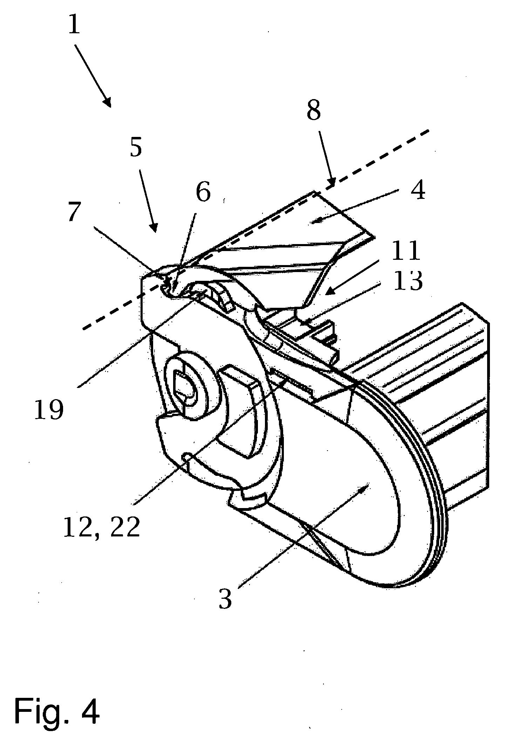

In Fig. 4 ist ein Ausschnitt eines Kettenglieds 1 mit einer Seitenlasche 3 gemäß Fig. 2 und einem Quersteg 4 gemäß Fig. 3 in einer Momentaufnahme während der Montage in perspektivischer Darstellung gezeigt. In dem hier dargestellten Montagezustand wurde die Anlagefläche 6 der Schwenkgruppe 5 an die Aufnahme 7 der Schwenkgruppe 5 angelegt. Dementsprechend wurde die andere Anlagefläche 6 (nicht dargestellt) mit der anderen Aufnahme 7 der nicht dargestellten Seitenlasche 3 ebenfalls in Anlage gebracht. Durch das Anlegen der Elemente der Schwenkgruppe 5 wird eine Schwenkachse 8 ausgebildet. Im Folgenden wird der Quersteg 4 um die Schwenkachse 8 zu der Seitenlasche 3 geschwenkt, wobei die Erhebung 19 in die Vertiefung 18 eingreift und den Schwenkvorgang führt. Am Ende des Schwenkvorgangs wirken das Verriegelungselement 11 und das Widerlager 12 verrastend zusammen. Zudem verrastet der Steg 28 mit der Ausnehmung 13.

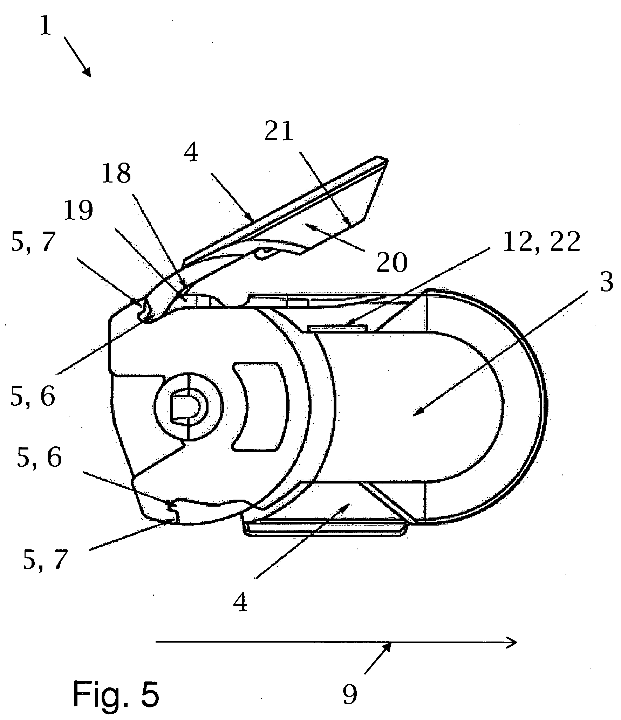

Fig. 5 zeigt den Montagezustand gemäß Fig. 4 in einer Seitenansicht, wobei die untere Seitenlasche 4 bereits montiert ist. Die obere Seitenlasche 4 ist über die Anlagefläche 6 mit der Aufnahme 7 in Anlage gebracht worden. Beim anschließenden Schwenkvorgang greift die Erhebung 19 in die Vertiefung 18, so dass der Schwenkvorgang geführt wird und ein Abstand zwischen den Seitenlaschen 3 festgelegt wird. Am Ende des Schwenkvorgangs verrastet der Raststeg 21 mit dem durch eine Rastvertiefung 22 gebildeten Widerlager 12. Dabei wird das Federelement 20 quer zur Längsachse 9 des Kettenglieds ausgelenkt.

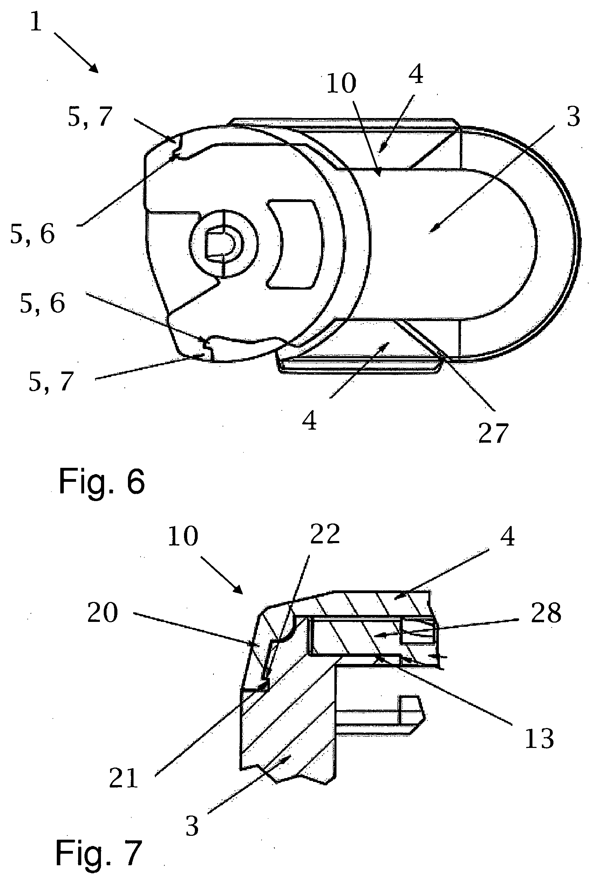

Fig. 6 zeigt schematisch ein montiertes Kettenglied 1 in Seitenansicht. Der Quersteg 4 und die Seitenlaschen 3 wurden dadurch miteinander verbunden, dass die Elemente der Schwenkgruppe 5 in Eingriff gebracht wurden und dass die Elemente der Rastgruppe 10 miteinander verrastet wurden. Zwischen der Seitenlasche 3 und dem Quersteg 4 ist ein Öffnungsschlitz 27 ausgebildet, mit Hilfe dessen die Rastverbindung der Elemente der Rastgruppe 10 gelöst werden können, indem das Federelement 20 nach außen ausgelenkt wird.

Fig. 7 zeigt einen Ausschnitt eines Querschnitts durch die montierten Kettenglieder gemäß Fig. 6 im Bereich der Rastgruppe 10. Der Quersteg 4 ist mit einem Steg 28 verbunden, der in der Ausnehmung 13 angeordnet ist und dort insbesondere rastend mit der Seitenlasche 3 verbunden ist. Ferner sind die Elemente der Rastgruppe 10 dargestellt, wobei ein Raststeg 21 aufweisendes Federelement 20 an dem Quersteg ausgebildet ist. Der Raststeg 21 steht in Eingriff mit einer Rastvertiefung 22. Um den Quersteg 4 von der Seitenlasche 3 zu lösen, ist das Federelement 20 mit dem Raststeg 21 nach außen auslenkbar. Damit das Kettenglied 1 komplett demontiert wird, müsste allerdings an beiden Seitenlaschen die Federelemente 20 gleichzeitig ausgelenkt werden.

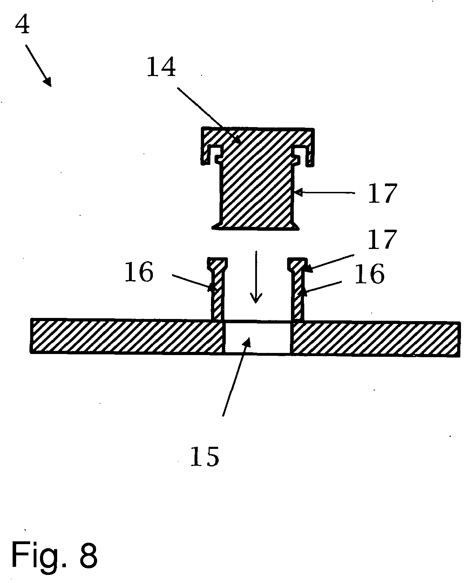

Fig. 8 zeigt einen Quersteg 4 in einer Querschnittsansicht und ein Profil 14. Der Quersteg 4 weist eine Aussparung 15 auf und Rastvorsprünge 16, die sich am Rand der Aussparung 15 nach oben erstrecken und eine Kontur 17 aufweisen. Das Profil 14 weist ebenfalls eine Kontur 17 auf und kann durch die Rastvorsprünge 16 in die Aussparung 15 eingeführt werden, wo es rastend mit dem Quersteg 4 verbunden wird. Im verbundenen Zustand bildet das Profil 14 einen Steg 28.

Durch die vorliegende Erfindung wird ein Kettenglied 1 angegeben, das einfach mit einer Vielzahl von verschiedenen Querstegen 4 und Seitenlaschen 4 zusammengebaut werden kann, wobei die Verbindung zwischen Quersteg 4 und Seitenlasche 3 nicht zufällig gelöst werden kann.

### Bezugszeichenliste

- 1: Kettenglied
- 2: Energieführungskette
- 3: Seitenlasche
- 4: Quersteg
- 5: Schwenkgruppe
- 6: Anlagefläche
- 7: Aufnahme
- 8: Schwenkachse
- 9: Längsachse
- 10: Rastgruppe
- 11: Verriegelungselement
- 12: Widerlager
- 13: Ausnehmung
- 14: Profil
- 15: Aussparung
- 16: Rastvorsprung
- 17: Kontur
- 18: Vertiefung
- 19: Erhebung
- 20: Federelement
- 21: Raststeg
- 22: Rastvertiefung
- 23: Anschlussbereich
- 24: Festanschlusspunkt
- 25: beweglicher Anschlusspunkt
- 26: Außenseite
- 27: Öffnungsschlitz
- 28: Steg

## Patentansprüche

1. Kettenglied (1) einer Energieführungskette (2) mit zwei parallelen Seitenlaschen (3) und mindestens einem Quersteg (4), bei dem die zwei Seitenlaschen (3) und der mindestens eine Quersteg (4) durch Anlegen, Schwenken und Rasten miteinander verbunden sind, wobei zwei Schwenkgruppen (5), die jeweils eine Anlagefläche (6) und eine entsprechende Aufnahme (7) zum Anlegen der Anlagefläche (6) derart umfassen, dass die Schwenkgruppen (5) in angelegtem Zustand eine Schwenkachse (8) quer zur Längsachse (9) des Kettenglieds (1) ausbilden, und zwei Rastgruppen (10), die jeweils durch ein an dem Querstegangeordnetes Verriegelungselement (11) und ein entsprechendes Widerlager (12, 13) zur Aufnahme des Verriegelungselements (11) gebildet sind, vorgesehen sind, **dadurch gekennzeichnet, dass** das Verriegelungselement (11) durch ein Federelement (20) mit eine Raststeg (21) und das Widerlager (12) durch eine entsprechende Rastvertiefung (22) auf einer Außenseite (26) der Seitenlasche zur Aufnahme des Raststegs (21) gebildet ist.

2. Kettenglied (1) nach Patentanspruch 1, wobei die Schwenkgruppen (5) eine Bewegung des Querstegs (4) zu der Seitenlasche (3) quer zur Längsachse (9) des Kettenglieds (1) verhindern.

3. Kettenglied (1) nach Patentanspruch 1 oder 2, wobei mindestens ein Steg (28) an dem Quersteg (4) zum Inneren des Kettenglieds (1) ausgebildet ist und eine Ausnehmung (13) in den Seitenlaschen (3) zur rastenden Aufnahme des Stegs (28) ausgebildet ist.

4. Kettenglied (1) nach Patentanspruch 1 oder 2, wobei ein Profil (14) zur Befestigung von mindestens einem Steg (28) an dem Quersteg (4) zum Inneren des Kettenglieds (1) ausgebildet ist.

5. Kettenglied (1) nach Patentanspruch 4, wobei der Quersteg (4) eine Aussparung (15) zur rastenden Aufnahme des Profils (14) aufweist, die sich quer zur Längsachse (9) des Kettenglieds (1) erstreckt.

6. Kettenglied (1) nach Patentanspruch 5, wobei sich Rastvorsprünge (16) zu beiden Seiten entlang der Aussparung (15) zum Inneren des Kettenlieds (1) erstrecken.

7. Kettenglied (1) nach Patentanspruch 6, wobei die Rastvorsprünge (16) Konturen (17) zur Aufnahme des Profils (14) aufweisen, die mit Konturen (17) des Profils (14) rastend zusammenwirken.

8. Kettenglied (1) nach einem der Patentansprüche 4 bis 7, wobei das als Steg (28) verwendete Profil (14) das Verriegelungselement (11) der Rastgruppe (10) und die Ausnehmung (13) das Widerlager bilden.

9. Kettenglied (1) nach einem der vorhergehenden Patentansprüche, wobei die Schwenkgruppe (5) eine Vertiefung (18) und eine entsprechende, in die Vertiefung (18) eingeführte Erhebung (19) aufweist, die zwischen Schwenkachse (8) und Rastgruppe (10) angeordnet ist.

10. Energieführungskette (2) umfassend eine Vielzahl von Kettengliedern (1) nach einem der vorhergehenden Patentansprüche.

## Claims

1. Chain link (1) of an energy-conducting chain (2), having two parallel side tabs (3) and at least one transverse crosspiece (4), in which the two side tabs (3) and the at least one transverse crosspiece (4) are connected with one another by being laid against, pivoted, and engaged into one another, wherein two pivot groups (5), which comprise a contact surface (6) and a corresponding accommodation (7) for having the contact surface (6) make contact, in each instance, in such a manner that the pivot groups (5), in the contacted state, form a pivot axis (8) transverse to the longitudinal axis (9) of the chain link (1), and two engagement groups (10), which are formed by a locking element (11) arranged at the transverse crosspiece and a corresponding counter-bearing (12, 13) for accommodating the locking element (11), in each instance, are provided, **characterized in that** the locking element (11) is formed by a spring element (20) having an engagement crosspiece (21), and the counter-bearing (12) is formed by a corresponding engagement depression (22) on an outside (26) of the side tab for accommodation of the engagement crosspiece (21).

2. Chain link (1) according to claim 1, wherein the pivot groups (5) prevent movement of the transverse crosspiece (4) toward the side tabs (3), transverse to the longitudinal axis (9) of the chain link (1).

3. Chain link (1) according to claim 1 or 2, wherein at least one crosspiece (28) is configured at the transverse crosspiece (4), toward the interior of the chain link (1), and a recess (13) is configured in the side tabs (3), for engaged accommodation of the crosspiece (28).

4. Chain link (1) according to claim 1 or 2, wherein a profile (14) is configured for attachment of at least one crosspiece (28) on the transverse crosspiece (4), toward the interior of the chain link (1).

5. Chain link (1) according to claim 4, wherein the transverse crosspiece (4) has a niche (15) for engaged accommodation of the profile (14), which niche extends transverse to the longitudinal axis (9) of the chain link (1).

6. Chain link (1) according to claim 5, wherein engagement projections (16) extend on both sides along the niche (15), toward the interior of the chain link (1).

7. Chain link (1) according to claim 6, wherein the engagement projections (16) have contours (17) for accommodation of the profile (14), which interact with and engage into contours (17) of the profile (14).

8. Chain link (1) according to one of claims 4 to 7, wherein the profile (14) used as a crosspiece (28) forms the locking element (11) of the engagement group (10) and the recess (13) forms the counter-bearing.

9. Chain link (1) according to one of the preceding claims, wherein the pivot group (5) has a depression (18) and a corresponding elevation (19) that is introduced into the depression (18), which is disposed between pivot axis (8) and engagement group (10).

10. Energy-guiding chain (2) comprising a plurality of chain links (1) according to one of the preceding claims.

## Revendications

1. Maillon de chaîne (1) d'une chaîne de transfert d'énergie (2) comprenant deux éclisses latérales (3) et au moins une nervure transversale (4), les deux éclisses latérales (3) et l'au moins une nervure transversale (4) étant connectées l'une à l'autre par application, pivotement et encliquetage, deux groupes pivotants (5) qui comprennent chacun une surface d'appui (6) et un logement correspondant (7) pour l'appui de la surface d'appui (6) de telle sorte que les groupes pivotants (5), dans l'état appliqué, constituent un axe de pivotement (8) transversalement à l'axe longitudinal (9) du maillon de chaîne (1) et deux groupes d'encliquetage (10), qui sont formés chacun par un élément de verrouillage disposé sur la nervure transversale (11) et une butée correspondante (12, 13) pour recevoir l'élément de verrouillage (11), étant prévus, **caractérisé en ce que** l'élément de verrouillage (11) est formé par un élément de ressort (20) avec une nervure d'encliquetage (21) et la butée (12) est formée par un renfoncement d'encliquetage correspondant (22) sur un côté extérieur (26) de l'éclisse latérale pour recevoir la nervure d'encliquetage (21).

2. Maillon de chaîne (1) selon la revendication 1, dans lequel les groupes pivotants (5) empêchent un déplacement de la nervure transversale (4) par rapport à l'éclisse latérale (3) transversalement à l'axe longitudinal (9) du maillon de chaîne (1).

3. Maillon de chaîne (1) selon la revendication 1 ou 2, dans lequel au moins une nervure (28) est réalisée sur la nervure transversale (4) vers l'intérieur du maillon de chaîne (1) et un évidement (13) est réalisé dans les éclisses latérales (3) vers le logement d'encliquetage de la nervure (28).

4. Maillon de chaîne (1) selon la revendication 1 ou 2, dans lequel un profilé (14) pour la fixation d'au moins une nervure (28) sur la nervure transversale (4) est réalisé vers l'intérieur du maillon de chaîne (1).

5. Maillon de chaîne (1) selon la revendication 4, dans lequel la nervure transversale (4) présente un évidement (15) pour recevoir par encliquetage le profilé (14) qui s'étend transversalement à l'axe longitudinal (9) du maillon de chaîne (1).

6. Maillon de chaîne (1) selon la revendication 5, dans lequel les saillies d'encliquetage (16) s'étendent des deux côtés le long de l'évidement (15) vers l'intérieur du maillon de chaîne (1).

7. Maillon de chaîne (1) selon la revendication 6, dans lequel les saillies d'encliquetage (16) présentent des contours (17) pour recevoir le profilé (14), lesquels coopèrent par encliquetage avec des contours (17) du profilé (14).

8. Maillon de chaîne (1) selon l'une quelconque des revendications 4 à 7, dans lequel le profilé (14) utilisé en tant que nervure (28) forme l'élément de verrouillage (11) du groupe d'encliquetage (10) et l'évidement (13) forme la butée.

9. Maillon de chaîne (1) selon l'une quelconque des revendications précédentes, dans lequel le groupe pivotant (5) présente un renfoncement (18) et un rehaussement correspondant (19), introduit dans le renfoncement (18), qui est disposé entre l'axe de pivotement (8) et le groupe d'encliquetage (10).

10. Chaîne de transfert d'énergie (2) comprenant une pluralité de maillons de chaîne (1) selon l'une quelconque des revendications précédentes.
